# EUROPÄISCHE PATENTSCHRIFT

(11) **EP 1 914 012 B1**
(45) Veröffentlichungstag und Bekanntmachung des Hinweises auf die Patenterteilung: **04.06.2014**
(21) Anmeldenummer: 06021874.0
(22) Anmeldetag: 18.10.2006
(51) Int. Cl.: B08B 7/00, B09B 5/00

(54) **Verfahren zur Entfernung eines stoffschlüssig verbundenen Verschleißschutzes**
Process for eliminating an integrally connected anti-wear
Procédé pour éliminer une protection anti-usure connectée de manière intégrale

(43) Veröffentlichungstag der Anmeldung: 23.04.2008
(73) Patentinhaber: Kalenborn Kalprotect - Dr. Mauritz GmbH & Co. KG, 53560 Vettelschoss (DE)
(72) Erfinder: Tremmer, Dietmar, 72124 Pliezhausen (DE); Messerschmidt, Christopher, 72124 Pliezhausen (DE)
(74) Vertreter: Kloiber, Thomas

(56) Entgegenhaltungen:
- WO-A-97/00141
- DE-A1- 3 838 214
- DE-A1- 10 360 063
- JP-A- 3 002 595
- JP-A- 5 016 721

## Beschreibung

Die vorliegende Erfindung betrifft ein Verfahren zur Entfernung von am Konstruktionswerkstoff verfahrenstechnischer Anlagen mit einem Verbinder stoffschlüssig befestigter Verschleißschutzauskleidungen, wie z.B. aus DE 10 360 063 oder DE-A-38,38214 bekannt.

Verfahrenstechnische Großanlagen, wie Bunker, Rutschen, Abscheider, et cetera, in denen das Fördergut reibenden Verschleiß verursacht, werden oftmals mit Verschleißschutzauskleidungen versehen, die aus mineralischen, keramischen oder metallischen Werkstoffen bestehen, die eine hohe Druckfestigkeit, ein hohes E-Modul und große Abriebfestigkeit, sowie Wasser- und Säurebeständigkeit aufweisen. Die Verschleißschutzauskleidung wird an dem Konstruktionswerkstoff der Anlagen -in der Regel Stahl- mit einem Mörtel, einem Mörtel mit organischen Zuschlagstoffen oder einem organischen Klebstoff wie Epoxydharz, Bitumen oder ähnlichem befestigt. Zwischen Verschleißschutzauskleidung und Stahl kann sich demnach ein Gemisch aus unterschiedlichsten Substanzen wie beispielsweise Calciumoxid, Siliziumdioxid, Aluminiumoxid, Eisenoxid, Polyester, Epoxydharze, Amine, Feinmehle, Feinsände, Thixotropierungsmittel und weitere Additive wie Leitruße befinden.

Zur Ausbesserung oder Erneuerung der Verschleißschutzverkleidung wird diese mit Hilfe von Presslufthämmern entfernt, wobei üblicherweise Rückstände auf dem Stahl verbleiben. Vor der Anbringung einer neuen Verschleißschutzauskleidung müssen diese Rückstände mühsam von Hand mit Hammer und Meißel abgeschlagen oder aufwendig mit Strahlgut abgestrahlt werden. Anschließend muss die nur grob gereinigte Stahloberfläche erneut abgestrahlt werden, um so einen guten Haftgrund für die neue Verschleißschutzauskleidung zu schaffen. Anstelle der Rückstandsentfernung mit Hammer und Meißel ist auch bekannt, die Außenseite der Großanlage mit der Flamme eines Schweißbrenners großflächig zu erwärmen, um so die Zement/Klebstoffreste anzulösen. Diese Arbeit ist zeitintensiv und beschädigt den Konstruktionswerkstoff.

Aus dem Bereich des Fahrzeugbaus sind einige Lehren zum Fügen und Lösen von Verbindungen bekannt. Beispielsweise beschreibt die EP 0 492 786 A2, ein nicht leitfähiges Bauteil mit einem leitfähigen Bauteil unter Zuhilfenahme eines wieder erwärmbaren Klebstoffs zwischen den beiden Bauteilen zu verbinden, wobei zur Erwärmung ein elektrisches Hochfrequenzfeld zwischen einer Elektrode und dem leitfähigen Bauteil verwendet wird. Aus dieser Schrift ist bekannt, einen Zweikomponenten-Epoxidkleber über 30 bis 40 Sekunden mit hochfrequenten Wechselfeldern in einem Frequenzbereich zwischen 25 und 40 MHz zu behandeln. Als Klebstoffe werden genannt: Vinylkleber, Ethylen-Co-Vinylacetatkleber, thermoplastische Polymethankleber und Polyesterkleber.

Aus der DE 101 37 713 ist bekannt, eine Klebeverbindung zwischen einem schwer verklebbaren Kunststoff und einem zweiten Bauteil herzustellen, in dem pulverförmige, metallische, keramische, organische oder thermoplastische Materialien auf das erste Bauteil mittels Kaltkompaktieren eingebracht, ein Klebstoff auf dem zweiten Bauteil aufgebracht und beide Bauteile zusammengefügt werden, wobei ein Entkleben durch induktives Einleiten von elektrischem Strom in die Materialien oder den Kleber erfolgt. Aus dieser Schrift ist demnach ein Klebevermittler bekannt.

Aus der DE 199 51 599 A1 ist schließlich ein Verfahren zu reversiblen Trennung von Klebeverbunden durch Anlegen elektromagnetischer Wechselfelder bekannt. Hierbei wird in einem Klebeverband aus mindestens einer Primärschicht, die nanoskalige Teilchen enthält, die ferromagnetische, ferrimagnetische, superparamagnetische oder piezoelektrische Eigenschaften hat, mittels elektromagnetischer Wechselfelder eine lokale hohe Wärmemenge erzeugt, die zu einem Erweichen der angrenzenden thermoplastischen Klebstoffschichten führt. Die Lehre dieser Schrift ist anwendbar auf gleiche oder verschiedene metallische oder nichtmetallische Substrate. Diese Schrift lehrt, die Wärmemenge in den dafür speziell geeigneten Kleber direkt einzubringen.

Es ist Aufgabe der vorliegenden Erfindung, ein effizientes Verfahren zur Entfernung von am Konstruktionswerkstoff verfahrenstechnischer Anlagen mit einem Verbinder stoffschlüssig befestigter Verschleißschutzauskleidungen anzugeben.

Diese Aufgabe wird durch ein Verfahren mit den Schritten gelöst, Einbringen eines mittelfrequenten Induktionsstromes in den Konstruktionswerkstoff, Wärmeübertragung vom Konstruktionswerkstoff auf den Verbinder unter Schwächung/Zerstörung der Bindung Konstruktionswerkstoff-Verbinder und Ablösen der Verschleißschutzauskleidung vom Konstruktionswerkstoff. Die Verwendung mittelfrequenten Induktionsstromes im Bereich von 1 bis 10 kHz erzeugt gezielt im Konstruktionswerkstoff aufgrund von induzierten Wirbelströmen Wärmemengen von bis zu 30.000 Watt/cm², die den Konstruktionswerkstoff nicht beschädigen oder oxidieren, wie bei Erwärmung mit Schneidbrennern. Der Vorteil des Verfahrens liegt in der schnellen Ablösung der Verschleißschutzauskleidung, den geringen verbleibenden Rückständen auf dem Konstruktionswerkstoff und dem geringen Aufwand für die Nachbehandlung zur Erzeugung einer metallischen Oberfläche, auf der die neue Verschleißauskleidung gut haftet.

In Ausgestaltung des Verfahrens ist vorgesehen, dass der Verbinder gewählt ist aus der Gruppe die gebildet wird durch Metalle, Bitumen, Epoxydharze, Mörtel und Mörtel mit organischen Bestandteilen. Mit großem Vorteil ist erfindungsgemäß vorgesehen, dass der Verbinder als solcher nicht leitfähig ist, so dass keine speziellen Zusammensetzungen wie im Stand der Technik beschrieben, erforderlich sind. Es ist mit großem Vorteil jeder Verbinder verwendbar, dessen Haftfestigkeit temperaturabhängig ist. Daher können erfindungsgemäß sowohl Metalle, als auch reine organische Verbinder wie Epoxydharze, Bitumen oder dergleichen sowie Mischungen aus anorganischen und organischen Verbindern wie organische Mörtel mit dem Verfahren behandelt werden.

Wenn, wie erfindungsgemäß vorgesehen ist, der Mörtel die Bestandteile Epoxydharz, Polyesterharz, Härter, Feinsand, Feinmehl auf Quarzsandbasis, Thixotropierungsmittel und Additive enthält, ist mit dem erfindungsgemäßen Verfahren jeder übliche Verbinder zwischen Konstruktionswerkstoff und Verschleißschutzauskleidung lösbar.

In Ausgestaltung der Erfindung ist vorgesehen, dass der mittelfrequente Induktionsstrom von der Seite des Konstruktionswerkstoffes und von der Seite der Verschleißschutzauskleidung eingebracht wird. Hierdurch mit großem Vorteil möglich, die Verschleißschutzauskleidung auch vom Inneren des Anlagenteils her zu lösen, beispielsweise, wenn dieses von Außen gar nicht oder nur sehr schwer zugänglich ist. Andererseits kann bei beidseitiger Anwendung des Verfahrens die gleiche Wärmemenge im Konstruktionswerkstoff bei halbierter Leistung pro Induktionsgerät erreicht werden. Bei dieser Verfahrensausführung wird die Verbinderschicht gleichmäßiger erwärmt und somit homogener ablösbar.

Mit großem Vorteil ist das erfindungsgemäße Verfahren auf Anlagen anwendbar wie Abscheider, Absetzbecken, Ascheleitungen, Bandabwurfrutschen, Bachfassungen, Bergefallrohre, Blasversatzleitungen, Brecher, Bunker, Bunkerwendeln, Drehrohröfen, Entstauber, Entstaubungsleitungen, Eindicker, Entkiesungsstollen, Mischertröge, Mühlen, Umluftsichter, Pulper, Prillturmböden, Rauchgaskanäle, Rezipienten, Rinnen, Rohre, Rohrbogen, Rohrkettenförderer, Rutschen, Schachtwendeln, Schlämmer, Schneckentröge, Schurren, Schwemmrinnen, Seperatoren, Sichter, Silos, Sinterrinnen, Trichter, Trockentrommeln, Trockenstrecken, Turboseparatoren, Vibrationsrinnen, Waschtrommeln, Zyklone.

In praktischer Ausgestaltung des erfindungsgemäßen Verfahrens setzt ein Anwender einen Induktor auf den Konstruktionswerkstoff beispielsweise den Stahl eines Drehrohrofens oder einer Mühle, eines Brechers oder Abscheiders, eines Zyklons oder Löffelkettenförderers und befestigt diesen dort in geeigneter Weise. Durch Anlegung eines mittelfrequenten Wechselfeldes im Bereich von 1 bis 10 kHz wird der Konstruktionswerkstoff, in den meisten Fällen Stahl, lokal erwärmt. Aufgrund der hohen Wärmeleitfähigkeit des Stahls wird diese Wärme auf den vom Induktor aus gesehen dahinterliegenden Verbinder übertragen, der in der Regel ein Epoxydharz, ein Bitumen, oder ein Mörtel mit organischen Anteilen ist. Aufgrund der Wärmeübertragung reduziert sich dessen Haftfähigkeit am Stahl, so dass ein weiterer Anwender im Inneren der verfahrenstechnischen Anlage die gelockerte Verschleißschutzauskleidung annähernd rückstandsfrei vom Stahl abheben kann. Während der Induktor an der Außenfläche der großtechnischen Anlage weiterbewegt wird, kann der Anwender im Inneren derselben die freigelegte, noch warme Metalloberfläche reinigen. Auf diese Weise ist ein kontinuierliches rückstandsfreies Arbeiten ohne Beschädigung der verfahrenstechnischen Anlage möglich.

## Patentansprüche

1. Verfahren zur Entfernung von am Konstruktionswerkstoff verfahrenstechnischer Anlagen, nämlich von Abscheidern, Absetzbecken, Ascheleitungen, Bandabwurfrutschen, Bachfassungen, Bergefallrohren, Blasversatzleitungen, Brechern, Bunkern, Bunkerwendeln, Drehrohröfen, Entstaubern, Entstaubungsleitungen, Eindickern, Entkiesungsstollen, Mischertrögen, Mühlen, Umluftsichtern, Pulpern, Prillturmböden, Rauchgaskanälen, Rezipienten, Rinnen, Rohren, Rohrbogen, Rohrkettenförderern, Rutschen, Schachtwendeln, Schlämmern, Schneckentrögen, Schurren, Schwemmrinnen, Separatoren, Sichtern, Silos, Sinterrinnen, Trichtern, Trockentrommeln, Trockenstrecken, Turboseperatoren, Vibrationsrinnen, Waschtrommeln, Zyklonen, mit einem Verbinder stoffschlüssig befestigten Verschleißschutzauskleidungen, wobei der Verbinder gewählt ist aus der Gruppe, die gebildet wird durch Metalle, Mörtel und Mörtel mit organischen Bestandteilen, wobei der Mörtel die Bestandteile Epoxydharz, Polyesterharz, Härter, Feinsand, Feinmehl auf Quarzsandbasis, Thixotropierungsmittel und Additive enthält, mit den Schritten:
a) Einbringen eines mittelfrequenten Induktionsstromes in den Konstruktionswerkstoff von der Seite des Konstruktionswerkstoffes und von der Seite der Verschleißschutzauskleidung her,
b) Wärmeübertragung von Konstruktionswerkstoff auf den Verbinder unter Schwächung/Zerstörung der Bindung von Konstruktionswerkstoff und Verbinder und
c) Ablösen der Verschleißschutzauskleidung vom Konstruktionswerkstoff, wobei die Verschleißschutzauskleidung aus mineralischen, keramischen oder metallischen Werkstoffen besteht.

## Claims

1. A method for removing wear-protection linings fastened using a binder in a materially-bonded manner on the constructional material of processing plants, namely of collectors, settling basins, ash pipes, belt discharge chutes, stream linings, mining waste pipes, pneumatic packing pipes, crushers, hoppers, spiral hoppers, rotary furnaces, dust extractors, dust-extraction pipes, thickeners, rock-removal drifts, mixer troughs, pulverisers, air circulation separators, pulpers, prill-tower bottoms, smoke-gas channels, recipients, gullies, pipes, pipe elbows, pipe chain conveyors, chutes, spiral shafts, elutriators, screw troughs, tip chutes, launders, separators, air separators, silos, sinter troughs, funnels, drying drums, drying lines, turboseparators, vibrating-trough conveyors, washing drums, cyclones, wherein the binder is chosen from the group, which is formed by metals, mortar and mortar with organic constituents, wherein the mortar contains the constituents, epoxy resin, polyester resin, curing agents, fine sand, fine granulate based on silica sand, thixotropic agents and additives, with the steps:
a) introducing a medium-frequency induction current into the construction material from the side of the construction material and from the side of the wear-protection lining
b) heat transfer from the construction material to the binder, with weakening/destruction of the bond of construction material and binder, and
c) detaching the wear-protection lining from the construction material, wherein the wear-protection lining consists of mineral, ceramic or metallic materials.

## Revendications

1. Procédé pour retirer des revêtements anti-usure fixés par liaison de matière avec un liant sur du matériaux de construction d'équipements de technique de procédé, à savoir des collecteurs, des bassins de décantation, des conduits de cendres, des toboggans de déchargement de tapis, des captages de ruisseau, des tuyaux à décharge de boue, des conduits de remblai par soufflage, des concasseurs, des caissons, des hélices de caisson, des fours tubulaires tournants, des dépoussiéreurs, des conduits de dépoussiérage, des épaississants, des galeries de dégravoiement, des auges de mélangeur, des moulins, des séparateurs à air, des pulpers, des sols de tours à priller, des canaux de gaz de fumées, des récipients, des gouttières, des tuyaux, des coudes de tuyaux, des convoyeurs à chaines à tubes, des toboggans, des hélices de puits, des schlammeurs, des auges de vis sans fin, des glissières, des goulottes de lavage, des dépoussiéreurs pneumatiques, des séparateurs, des silos, des goulottes d'agglomération, des trémies, des tambours de séchage, des voies sèches, des turboséparateurs, des goulottes vibrantes, des tambours de lavage, des cyclones, sachant que le liant est choisi parmi le groupe constitué des métaux, mortiers et mortiers avec composantes organiques, sachant que le mortier contient les composantes résine époxy, résine polyester, durcisseur, sable fin, farine fine à base de sable quartzique, agents de thixotropie et additifs, comprenant les étapes :
a) d'apport d'un courant d'induction moyenne fréquence dans le matériau de construction depuis le côté du matériau de construction et depuis le côté du revêtement anti-usure,
b) de transmission de chaleur du matériau de construction sur le liant par affaiblissement/destruction de la liaison du matériau de construction et du liant et
c) de pelliculage du revêtement anti-usure du matériau de construction, sachant que le revêtement anti-usure est composé de matériaux minéraux, céramiques ou métalliques.
